# EUROPEAN PATENT SPECIFICATION

(11) **EP 2 602 233 B1**
(45) Date of publication and mention of the grant of the patent: **05.04.2017**
(21) Application number: 12178953.1
(22) Date of filing: 02.08.2012
(51) Int. Cl.: C03B 33/027, C03B 33/03, C03B 33/033, C03B 33/037, C03B 33/04, C03B 33/07

(54) **Machine and method for performing breaking operations on a laminated glass plate along a predetermined path**
Maschine und Verfahren zur Durchführung von Bruchoperationen auf einer mehrschichtigen Glasscheibe entlang einer vorbestimmten Verlaufsbahn
Machine et procédé pour effectuer des opérations de rupture sur une feuille de verre feuilleté, le long d'un trajet prédéterminé

(30) Priority: 05.12.2011 IT TO20111115
(43) Date of publication of application: 12.06.2013
(73) Proprietor: Biesse S.p.A., 61122 Chiusa di Ginestreto (Pesaro Urbino) (IT)
(72) Inventor: Aimar, Giacomo, I-61122 Chiusa di Ginestreto (Pesaro Urbino) (IT); Sideri, Paolo, I-61122 Chiusa di Ginestreto (Pesaro Urbino) (IT)
(74) Representative: Notaro, Giancarlo

(56) References cited:
- EP-A1- 2 177 482
- EP-A1- 2 316 797
- US-A- 5 079 876

## Description

The present invention relates to a machine and to a method of the type indicated in the preamble of claim 1 and of claim 16.

A machine of this type is described in document EP 2 316 797 A1, owned by the same Applicant.

The object of the present invention is to improve the previously proposed machine, by increasing the efficiency, functionality and versatility of use, whilst at the same time keeping it constructionally simple and of a relatively low cost.

Further characteristics and advantages of the invention emerge from the description which follows with reference to the attached drawings, provided purely by way of non-limiting example, wherein:
- Figures 1 to 3 are a perspective view, a partially exploded view and an enlarged scale view of a detail, respectively, of a machine for the incision of a laminated glass plate of the known type from EP 2 316 797 A1, - Figures 4A and 4B represent, respectively, two views from above of a machine of the known type before and after the operation of incision of a plate according to a predetermined path, and Figure 4C schematically shows on an enlarged scale a detail of the position of the upper roller of incision with respect to the path to be followed;
- Figure 5 shows a particular embodiment of the breaking tools in a machine according to the invention,
- Figure 6 shows a side view on an enlarged scale of the breaking tools of Figure 5,
- Figure 7 shows a different embodiment of the breaking tools in a machine according to the invention, and
- Figure 8 shows a side view on an enlarged scale of the breaking tools of Figure 7,
- Figure 9 shows a view from above of a machine according to the invention during the breaking operation of a plate according to the path indicated,
- Figures 10, 11, 12 show schematic views of the breaking tools and of the plate during the breaking operation,
- Figure 13 shows a group associated with a counter-tool for breaking, and
- Figure 14 illustrates a sectional view along the line XIV of Figure 13.

In the following description various specific details are illustrated aimed at providing a thorough understanding of the embodiments. The embodiments can be implemented without one or more of the specific details, or with other methods, components, materials, etc. In other cases, structures, construction details, materials, or known operations are not illustrated or described in detail, as they can be implemented in any known way and as also, when considered separately, they do not fall within the context of the present invention

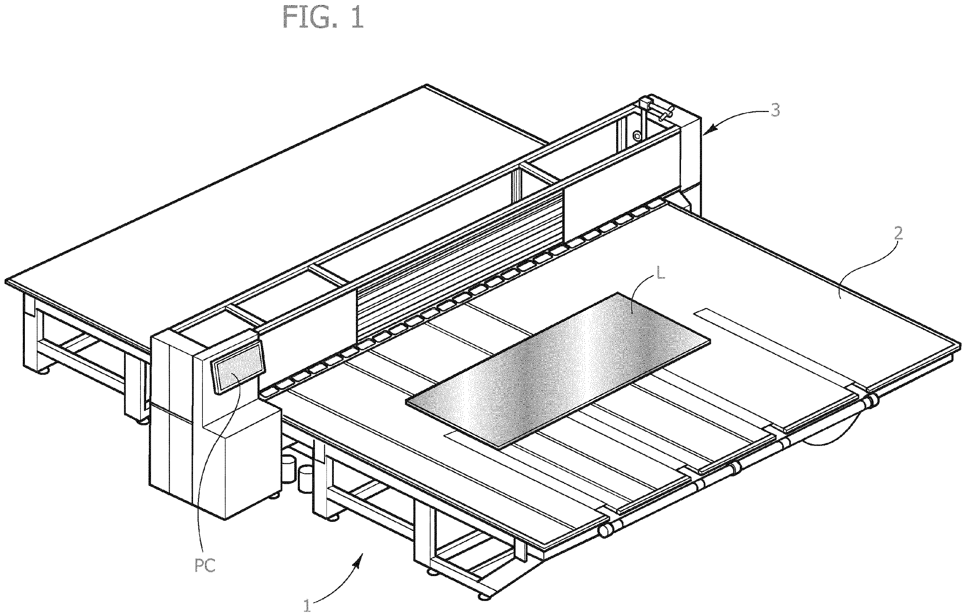

As indicated above, Figures 1 to 3 are a perspective view, a partially exploded view and a view on an enlarged scale of a detail of the known machine from EP 2 316 797 A1.

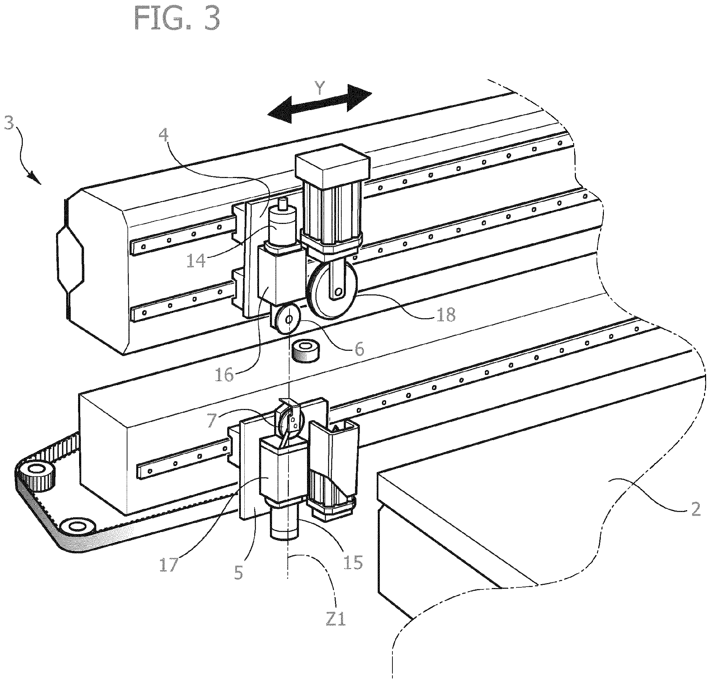

The illustrated machine is particularly suitable for the incision of laminated glass plates L comprising two superimposed glass layers with a film of synthetic material interposed between them. The machine comprises a fixed work bench 1, which defines a supporting plane 2 designed to receive the plate L to be processed. The machine also comprises a fixed cutting bridge 3 equipped with an upper carriage 4 and a lower carriage 5 (see Figure 3) both movable along the cutting bridge 3 in a direction Y parallel to the longitudinal direction of the cutting bridge 3 itself.

Still with particular reference to Figure 3, the upper carriage 4 and the lower carriage 5 carry an upper incision tool 6 and a lower incision tool 7, respectively, for the incision of the upper and lower layers of the glass plate L. In the embodiment the tools 6 and 7 are incision rollers. Below, several embodiments will be described in detail wherein the aforesaid rollers are driven in rotation by a motor or are freely rotatable about a vertical axis perpendicular to the directions X and Y.

Furthermore, the cutting bridge 3 is provided with actuator means (not shown in the Figures) of the movement of the upper carriage 4 and lower carriage 5 along the direction Y. As shown in Figure 3, in the illustrated embodiment the carriages 4 and 5 slide, for example, on longitudinal guides.

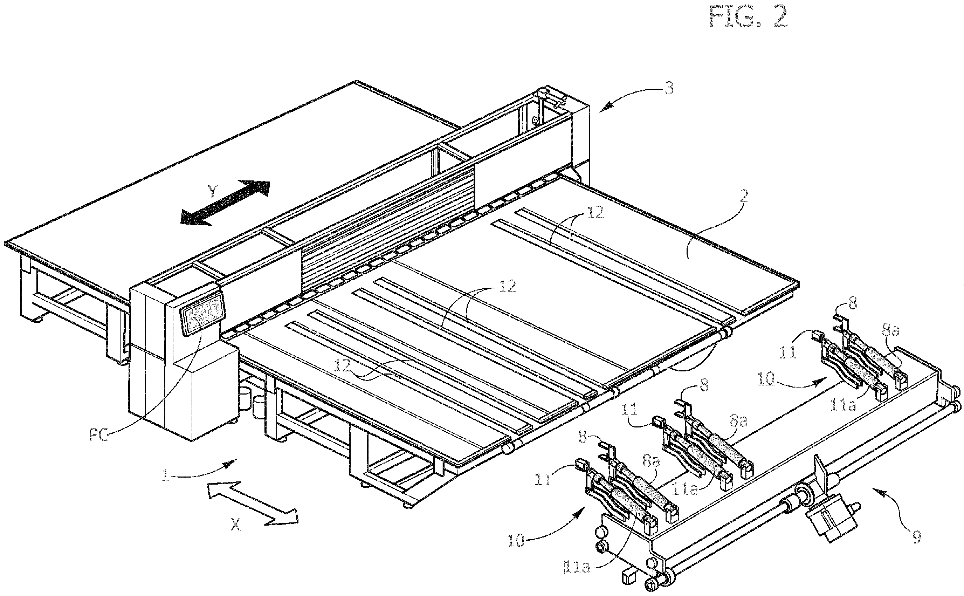

Figure 2 also illustrates means for moving the plate L on the fixed work bench 1 in a horizontal direction X perpendicular to the aforesaid direction Y.

In various alternative embodiments of the supporting structure the gripping members for moving the plate L on the fixed work bench 1 in a horizontal direction X can be a mobile bridge below the supporting plane and having the aforesaid gripping members which protrude to above the supporting plane through longitudinal slits of the support plane, or the use of a mobile bridge can be provided above the supporting plane upstream or downstream of the fixed cutting bridge.

Finally, the gripping members for holding the plate can be selected from clamps suitable for gripping an edge of the plate or vacuum cups suitable for engaging the upper or lower surface of the plate.

In particular, in the embodiment illustrated in Figure 2, the aforesaid means for moving the plate L in the direction X include clamps 8 carried from a bridge 9 movable below the supporting plane 2. The bridge in question is a measuring abutment bridge, known per se, typically used in the machines of Figure 1 in order to position the plate L for cutting to size of a strip from a semi-fabricated plate.

In particular, as known in the art, the measuring abutment bridge 9 comprises a plurality of articulated arms 10 on which the stop members 11 are mounted, against which the front edge of the plate is aligned to position the latter in order to cut it to the desired size. The stop members 11 are displaceable by means of fluid actuators 11 between a retracted position below the plane 2 and an operative position projecting above the plane 2 through corresponding slits 12 present on the work plane 2.

In the illustrated embodiment the bridge 9, in addition to being provided with the stop members 11, is also provided with the aforesaid clamps 8, always carried by articulated arms 10, to which fluid actuators 8a are associated and which are also adapted to protrude above the plane 2 through the aforesaid slits 12 (in Figure 2 the bridge 9 has been illustrated in the extracted position for convenience of representation, the bridge being hidden below the plane 2 in the assembled and operational condition).

With reference to Figures 1 and 2, means for the electronic control are also provided, identified by the reference PC, which control the actuating means for the movement of the upper carriage 4 and the lower carriage 5 along the Y direction and the movement of the bridge 9, which moves the plate in the direction X.

Still with reference to Figures 1 to 3, both the upper incision tool 6 and the incision lower tool 7 are rotatably mounted about an axis Z1 perpendicular to the direction X and the direction Y.

As mentioned previously, in the embodiment illustrated in Figure 3, the incision rollers 6 and 7 can be positively controlled in rotation around the axis Z1 by means of two respective motors, not shown in the Figure, and carried by carriages 4 and 5. In particular the rotation of the output shafts of the motors is transmitted, for example, via two transmission belts (also not shown for simplicity) at the ends of two shafts 14 and 15 which are rotatably supported around the axis Z1 by casings 16 and 17 fixed to the carriages 4 and 5. The opposite ends of the shafts 14 and 15 protrude to the outside of the casings 16 and 17 and support the incision rollers 6 and 7 in a freely rotatable manner around the respective horizontal axes of these rollers. The motors are controlled by the electronic control means PC illustrated in Figures 1 and 2.

In an alternative embodiment not shown, the upper incision tool 6 and the lower incision tool 7 are carried by supports freely rotatable around the axis Z1, without any predisposition of motors adapted to positively control such a rotation around the Z1 axis. The incision rollers 6 and 7 are thus freely rotatably mounted on the aforesaid supports around a horizontal axis of rotation spaced from the axis Z1. The horizontal axis of rotation of the rollers 6, 7 is spaced from the axis Z1 to ensure automatic orientation of the incision rollers during the incision operation along the direction of the local tangent to the path of incision. In this case, as will be seen, during the incision operation of a glass plate along a desired cutting path, incision rollers 6, 7 automatically assume a tangent orientation to the path at the point where they are located as a result of friction with the plate L.

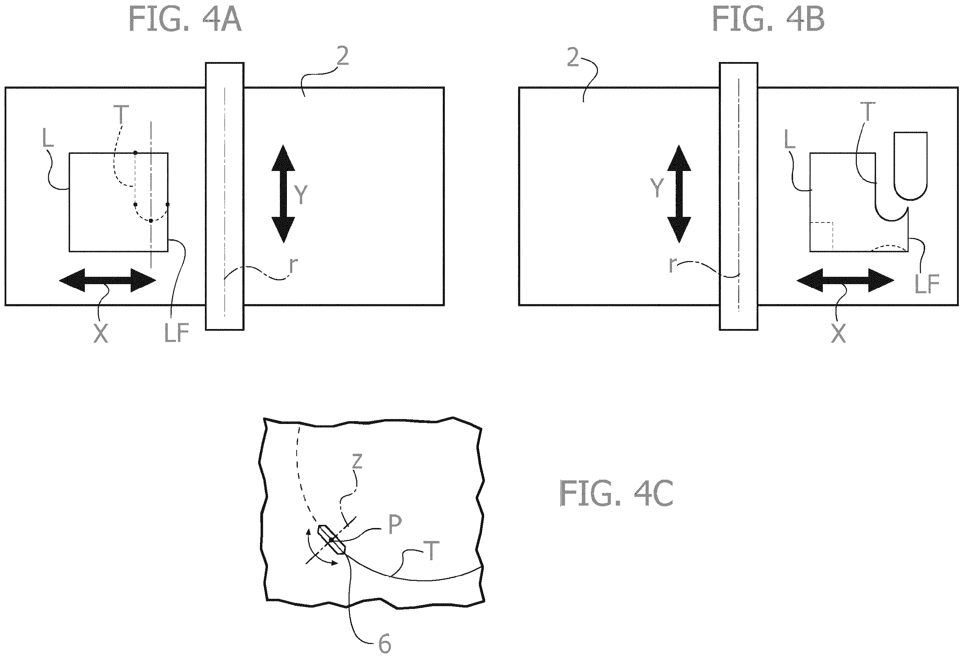

In the known machine, as in the machine according to the invention, the electronic control means PC are further programmed to control, during the incision operation of the glass plate L, a movement in the direction X of the plate L and a movement in the direction Y of the two carriages 4 and 5. The aforesaid movements are coordinated with each other so as to obtain an incision according to a predetermined path (see for example the path T in Figures 4A and 4B) in the plane of the plate L, with rectilinear and/or curved lines, and without the need to impart rotation to the plate.

During the incision operation the upper and lower incision tools 6 and 7 are always orientated according to the tangent to the path of incision at the point of the path in which they are located.

So, as already said, the known machine, as well as the machine according to the invention, is able to carry out incision of the upper layer and the lower layer of a laminated glass plate according to any desired path in the plane of the plate, also including curved or inclined lines with respect to the cutting line of the cutting bridge, without the need to impart a rotation to the plane of the plate.

A typical case is schematically illustrated in Figures 4A and 4B, where a plate of laminated glass is incised to obtain a plate for a window or door with an upper arched edge.

Figures 4A and 4B show two schematic views from above of a machine according to the invention, before and after the incision operation of the plate L, respectively, according to the predetermined path indicated by the dashed line T in Figure 4A. In these figures, the means for moving the plate in the X direction have not been illustrated for simplicity and clarity, these means being able to be produced in any of the ways described above.

In a first phase, the plate L rests on the work bench 2 and is then positioned so that its front edge LF is placed at the straight line r along which the incision rollers 6, 7 are movable. In a second phase, the movement of the plate in the direction X, and the movement of the cutting carriages 4 and 5 in the direction Y, are simultaneously activated in a coordinated manner in order to obtain the incision along the desired path T of the upper and lower layers of the plate L.

Figure 4C schematically shows on an enlarged scale the detail of the upper incision roller at a point P on the path T. As shown in Figure 4C, the upper incision roller 6 is located at a tangent position to the cutting line T at point P. Of course this also applies to the lower incision roller 7.

This positioning of the rollers 6 and 7 tangent to the path is positively controlled, as already indicated, in the case of embodiments in which motors are provided, while in the case of embodiments devoid of motors, is automatically obtained, due to the engagement of the rollers on the plate.

Upon completion of the incision, the plate L is subjected to a breaking phase, to a softening phase of the plastic plate (with known means, for example by localized heating using a hot air source) and to a tear-off phase of the plastic plate to obtain a total separation of the two plate portions.

Currently the further processing steps, subsequent to the incision step, are carried out manually.

With the machine according to the present invention, the cutting of the laminated glass plate L is obtained with a first incision step of the upper and lower layers and a subsequent breaking step into two separate portions of each of the said upper and lower layers, both of these steps being performed automatically. These stages are then followed by a softening phase by heating of the film of synthetic material and a phase of detachment or tearing of the film to obtain a total separation of the two portions of the laminated glass plate.

With the machine according to the invention the heating operation is preferably also carried out automatically.

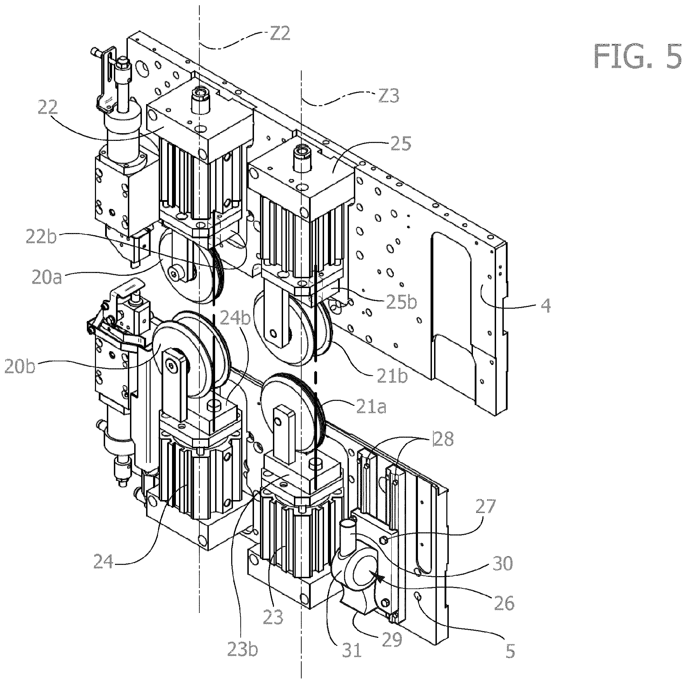

As already indicated, the machine according to the invention is however equipped with the known features from EP 2 316 797 A1, relative to the means for the automatic incision of the plate that have been described above, with reference to the example of the embodiment illustrated in Figures 1-3. For this reason, in Figures 5-12 the parts in common with Figures 1-3 have been indicated by the same references.

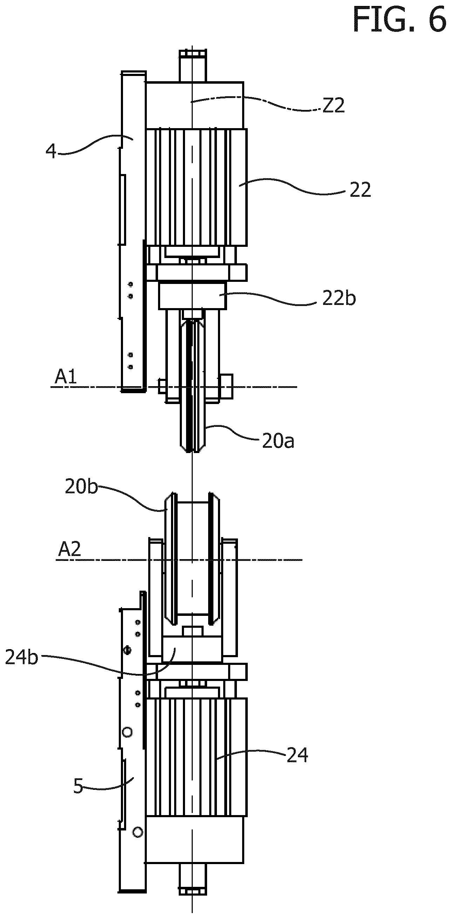

With reference to Figures 5 and 6, the machine according to the invention comprises an upper breaking tool 20a and a lower breaking tool 21a carried by the upper carriage 4 and the lower carriage 5, respectively, for the breaking of the lower layer and the upper layer of the plate L.

The aforesaid electronic control means PC are further programmed to control, during a breaking operation subsequent to an incision operation, a movement in the X direction of the plate L through the aforesaid bridge 9 and the aid of the clamps 8 and a movement in the Y direction of said carriages 4,5 carrying said upper breaking tool 20a and a lower breaking tool 21a.
These movements are coordinated in such a way as to obtain breaking of said layers of the plate according to the aforesaid predetermined path T in the plane of the plate L, with rectilinear and/or curved lines. Therefore, it is not necessary to impart a rotation to the plate L, but it is sufficient to coordinate the two movements in the directions X and Y to carry out the breaking operation according to the desired path.

The machine according to the invention also comprises a lower breaking counter-tool 20b cooperating with said upper breaking tool 20a and an upper breaking counter-tool 21b cooperating with said lower breaking tool 21a, wherein the aforesaid lower counter-tool 20b and upper counter-tool 21b are carried by the lower carriage 5 and upper carriage 4, respectively.

Still with reference to Figures 5 and 6, the upper breaking tool 20a is a wheel carried by a respective support 22b rotatable about an axis Z2 perpendicular to the X direction and the Y direction, and the lower breaking tool 21 a which is also a wheel carried by a respective support 23b rotatable about an axis Z3 perpendicular to the direction X and the direction Y.

Again with reference to Figure 5, each of the breaking counter-tools 20b and 21b is a wheel carried by a respective support 24b and 25b rotatable about their respective axis Z2 or Z3 and having a configuration complementary to that of the wheel cooperating with it.

The rotating supports 22b-23b-24b-25b are supported in rotation by supports 22-23-24-25 carried by carriages 4 and 5. The latter supports 22-23-24-25 are movable with respect to said carriages 4 and 5 between an inoperative portion spaced from the plate and an operational portion in contact with the plate. The supports 22-23-24-25 are, for example, vertically movable along guides which are not illustrated in the drawings for simplicity.

In particular, also with reference to Figure 6, the counter-tools 20b and 21b have a hollow wheel configuration with an H-shaped profile, so that the tools 20a and 21a intermesh with the respective counter-tools 20b and 21b. With this configuration, the breaking tool 20a and 21 a pushes the plate L exactly along the cutting line towards the counter-tool 20b and 21b, and the counter-tool 20b and 21b acts as a counterpart by coming into contact with two plate portions L, adjacent and offset with respect to the cutting line and symmetrical with respect to it.

Both the breaking tools 20a and 21a and the counter-tools 20b and 21b are wheels rotating around horizontal axes A1 and A2.

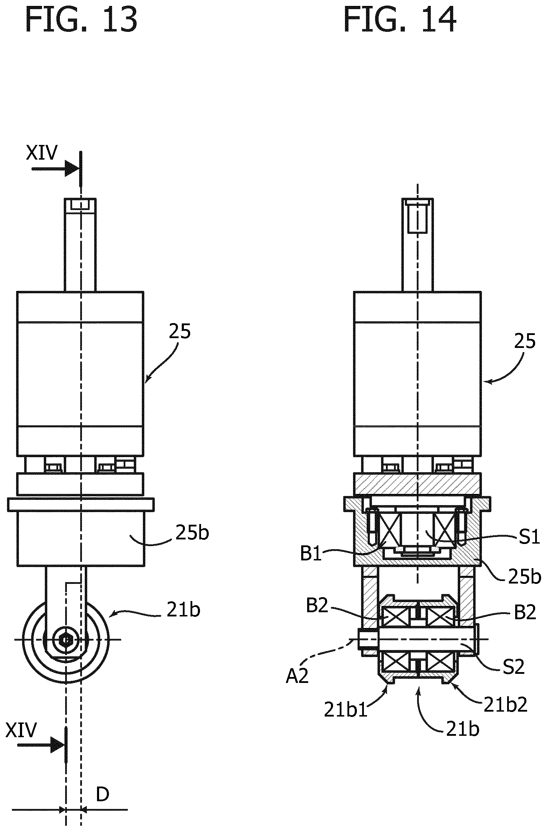

Similarly to the case of the incision tools, the supports 22b, 23b, 24b, 25b of the wheels 20a, 20b, 21a, 21b constituting the breaking tools and counter-tools, which are rotatable around axes Z2 and Z3, may also be arranged to be freely rotatable around these axes or, in an alternative solution, to be controlled in their rotation around these axes by means of respective electric motors. In the latter case, this rotation is controlled so as to keep the wheels 20a, 20b, 21a, 21b constantly tangent to the incision line traced on the glass plate. In the alternative case that the aforesaid supports are freely rotatable around axes Z2 and Z3, this condition of tangency is obtained automatically, thanks to the fact that the axes of rotation A1 and A2 of the wheels are horizontally spaced apart with respect to the vertical axes Z2 and Z3 (see Figure 5 and Figure 13), so that during the movement of the carriages of the machine with respect to the glass plate, said wheels will automatically orientate themselves in the manner desired.

In addition, as shown in Figure 13 with reference to the wheel 21b, each of the wheels 20b, 21b constituting the breaking counter-tools preferably comprises two wheel elements separated and independent (in this specific case 21b1 and 21b2) freely rotatably mounted around the common axis A2 independently of one another. In this way, each of the two wheel elements is able to roll properly, without sliding, on the glass plate at the two sides of a curved line of incision, despite each of them moving on a path with a different radius of curvature.

Still with reference to Figures 13, 14 each of the two wheel elements 21b1 and 21b2 illustrated is freely rotatably mounted, by means of a respective roller bearing B2, over a pin S2 carried by two arms projecting downwardly from the support 25b . The latter is in turn mounted in a freely rotatable manner around the axis Z3, by means of a roller bearing B1, on a pin S1 rigidly connected to the support 25. Figure 13 shows the spacing D between the Z3 axis and the axis A2, which allows the obtaining of the automatic orientation of the wheel group 21b according to the tangent at the incision line on the glass plate.

Again with reference to Figure 5, the lower carriage 5 also carries a hot air source 26 mounted on a slide 27 slidable on guides 28. This hot air source is used for the softening phase of the film of synthetic material interposed between the layers of glass. The source 26 is displaceable between a lowered inoperative condition spaced from the plate and a raised and operational condition wherein the source 26 is brought level with the lower layer of the plate L so as to heat the aforesaid film. The source 26 in question comprises a tubular output port 30 which is carried adjacent to or in contact with the lower layer of the plate L in the area where the layer has been incised and subsequently truncated, a fan 31 which is associated with a heating element and a supply port 29. Naturally the conformation of the device that generates the hot air flow for softening of the synthetic film may be of any other known type.

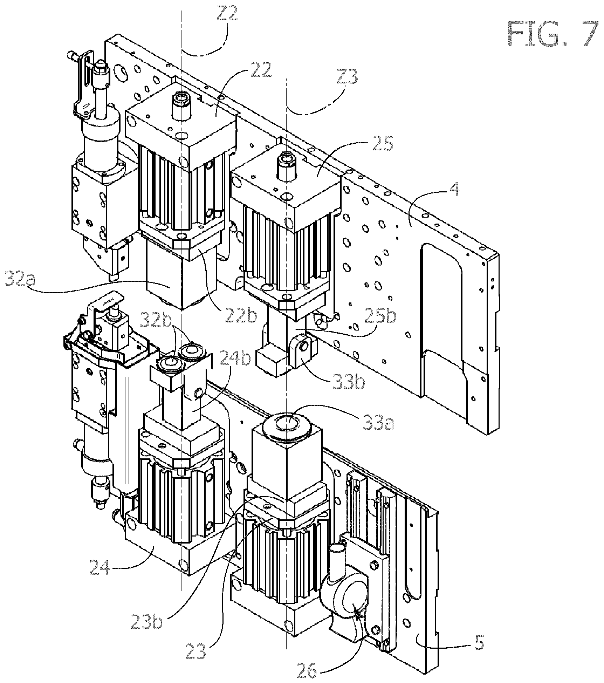

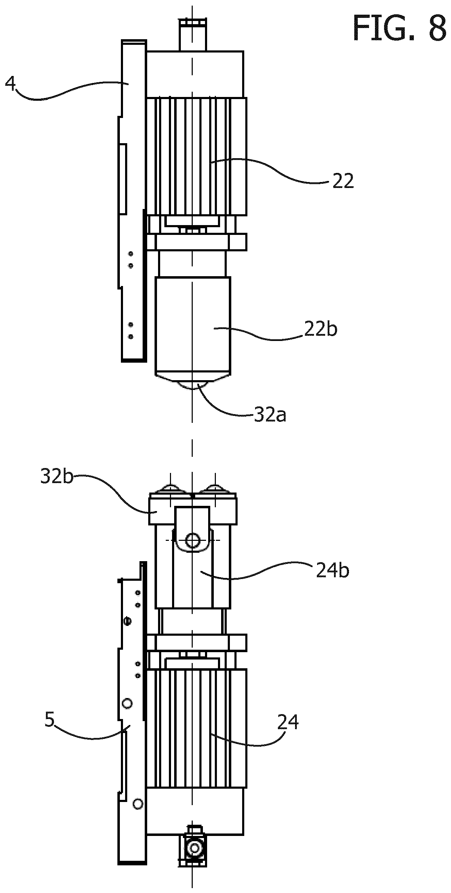

In an alternative embodiment (see Figures 7 and 8), the upper and lower breaking tools, 32a and 33a, respectively, have a spherical head for engagement against the plate. In this particular embodiment the breaking counter-tools 32b and 33b have a pair of spherical heads aligned along two axes perpendicular to the support plane and laterally offset with respect to the spherical head 32a and 33a of the cooperating tool.

The spherical heads of the tools and the counter-tools are carried by respective rotating supports 22b-23b-24b-25b shown in the Figures with the same references used for the first embodiment which provides the tools and the counter-tools in wheel form. The solution allows the spheres to rotate or roll in any direction.

Again, in this case, the spherical breaking tool (32a and 33a) presses against the plate in the area of incision while the counter-tool (32b and 33b) opposes a resistance acting on the plate in two offset portions with respect to the cutting line, and symmetrical with respect to itself. In a preferred embodiment, means for imparting a reciprocating percussive movement to the breaking tool are associated with said tool (not shown), along a direction perpendicular to the supporting plane 2.

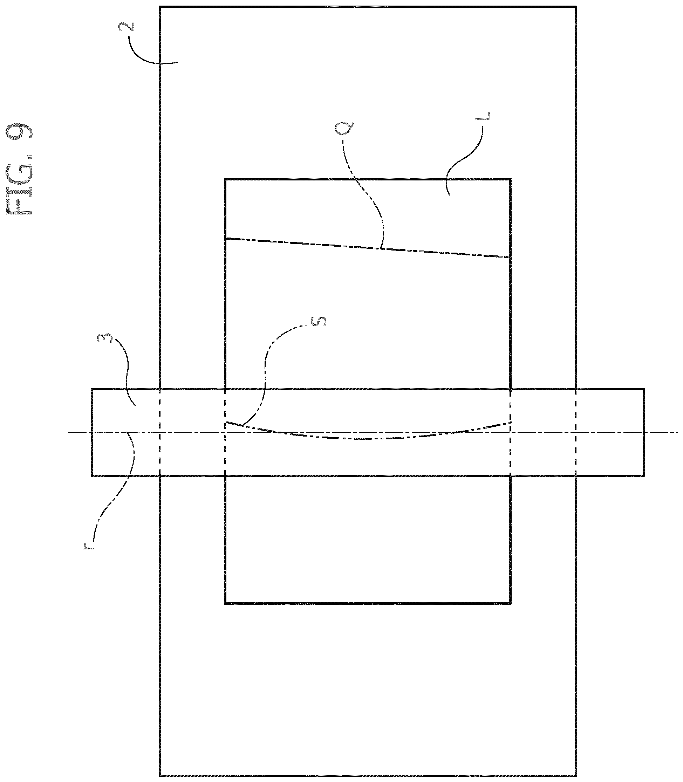

With reference to Figure 9, to obtain a cut along the path S, the plate L is subjected to a first contemporary incision phase of the upper and lower layers, and two successive breaking phases. In particular, in the first phase, the breaking of the lower layer occurs whereby the upper breaking tool 20a and the lower breaking counter-tool 20b (or 32a and 32b) are involved, and in the second phase the breaking of the upper layer occurs whereby the lower breaking tool 21 a and the upper counter-tool 21b (or 33a and 33b) are involved.

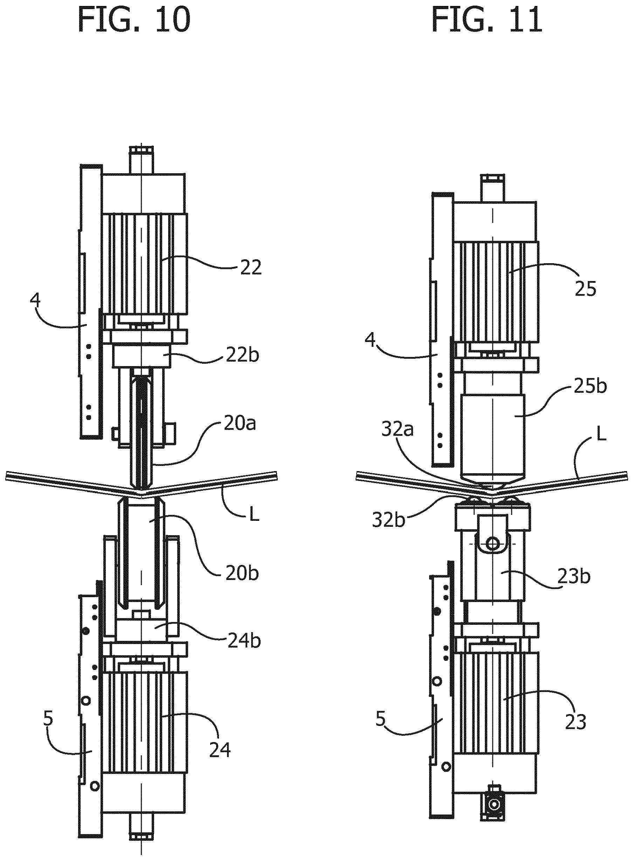

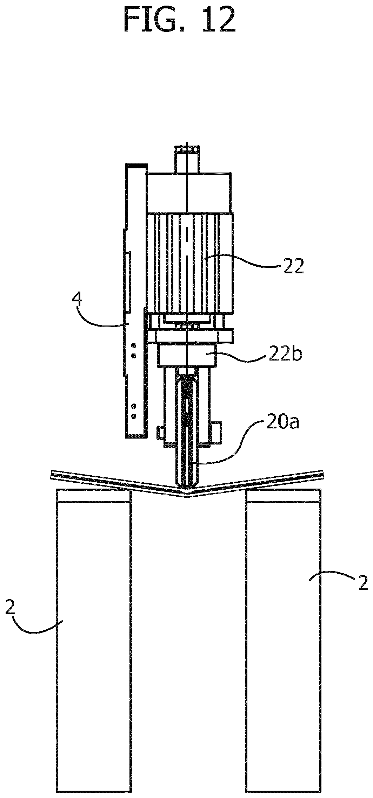

Figures 10 to 12 are schematic views in the vertical plane perpendicular to the cutting line that show, respectively, the breaking step of the lower layer of the plate L in the case of the wheel tools and wheel counter-tools (Figure 10), the case with a spherical head (Figure 11) and the case of a single upper tool cooperating with the supporting plane 2 (Figure 12).

Subsequently, the plate is subjected to a heating phase to soften the film of synthetic material. The machine thus comprises the aforesaid heating device 26 for softening of the film of synthetic material preferably carried by the lower carriage 5. The electronic control means control a further step in which they control the movement in the X direction of the plate L and the movement in the Y direction of the lower carriage which carries the heating device 26.

In particular the electronic control means are then programmed to repeatedly and sequentially check (at least four times, or rather once for the incision, twice for the breaking and once for the heating) the movement in the X direction of the plate L and the movement in the Y direction of the carriages, always according to the aforesaid predetermined path S in the plane of the plate L.

With the machine according to the present invention, it is certainly possible to perform breaking operations along curved paths with a large radius (such as the path S of Figure 9) and along straight oblique paths (such as the path Q of Figure 9) without the need to rotate the plate L. Conversely, in the case of paths that envisage lines with a tight radius of curvature, the machine according to the present invention may have limitations, and may need to return to manual breaking.

Of course, without prejudice to the principle of the invention, the details of production and the embodiments may vary, even significantly, with respect to those described and illustrated, purely by way of non-limiting example, without thereby departing from the scope of the invention, as defined by the claims that follow.

## Claims

1. Machine for performing incision and breaking operations on glass plates (L), in particular laminated glass plates comprising two overlapped glass layers with a film of synthetic material interposed between them, said machine comprising:
- a fixed work bench (1), defining a supporting plane (2) intended to receive the plate (L) to be processed,
- a fixed cutting bridge (3) equipped with an upper carriage (4) and a lower carriage (5) movable along the cutting bridge (3) in a direction Y parallel to the longitudinal direction of the cutting bridge (3),
- said upper carriage (4) and said lower carriage (5) carrying an upper incision tool (6) and a lower incision tool (7), respectively, for the incision of the upper and lower layers of the glass plate (L),
said cutting bridge (3) being provided with actuating means for the movement of said upper (4) and lower (5) carriages along the Y direction,
- means for moving (8, 9, 10) said plate (L) on the fixed bench (1) in a horizontal direction X perpendicular to the aforesaid direction Y, and
- means for the electronic control (PC) of said actuating means for the movement of said upper (4) and lower (5) carriages along the Y direction and said means for moving (8, 9, 10) the plate in the X direction,
- both the upper incision tool (6) and the lower incision tool (7) being rotatably mounted about an axis Z1 perpendicular to the X direction and the Y direction,
- the electronic control means (PC) being further programmed to control, during the incision operation of the glass plate (L), a movement in the X direction of the plate (L) and a movement in the Y direction of said carriages (4, 5), these movements being coordinated in such a way as to obtain an incision according to a predetermined path (T, S, Q) in the plane of the plate (L), with rectilinear and/or curved lines, and without the need to impart a rotation to the plate,
- said upper and lower incision tools (6, 7) being always orientated, during the incision operation, according to the tangent of the incision path at the point of the path in which they are located,
said machine being **characterized in that** it further comprises an upper breaking tool (18, 20a, 32a) and a lower breaking tool (21a, 33a) carried by said upper (4) and lower (5) carriages, respectively, for the breaking of the lower layer and the upper layer of the plate (L), and
**in that** the aforesaid electronic control means (PC) are further programmed to control, during a breaking operation of the glass plate (L) subsequent to an incision operation, a movement in the X direction of the plate (L) and a movement in the Y direction of said carriages (4, 5) carrying said upper breaking tool (18, 20a, 32a) and a lower breaking tool (21a, 33a), these movements being coordinated in such a way as to achieve breaking of said layers of the plate according to the said predetermined path (T, S, Q) in the plane of the plate (L), with rectilinear and/or curved lines, and without the need to impart a rotation to the plate (L), and
**in that** the machine further comprises a lower breaking counter-tool (20b, 32b) cooperating with said upper breaking tool (18, 20a, 32a) and an upper breaking counter-tool (21b, 33b) cooperating with said lower breaking tool (21a, 33a), and
said lower (20b, 32b) and upper (21b, 33b) counter-tools being carried by said lower (5) and upper (4) carriages, respectively.

2. Machine according to claim 1, **characterized in that** each of said upper and lower breaking tools (18, 20a, 21a) is a wheel carried in a rotatable manner about its axis (A1) by a respective support (22b, 23b ) rotatable around an axis Z2 or Z3 perpendicular to the direction X and the direction Y.

3. Machine according to claim 2, **characterized in that** said support (22b, 23b) is freely rotatable around said axis Z2 or Z3 and **in that** each of said wheels constituting said upper and lower breaking tools (20a, 21a) has its axis (A1) horizontally spaced apart with respect to the axis Z2 or Z3 of rotation of the respective support (22b, 23b).

4. Machine according to claim 2, **characterized in that** the rotation of said support (22b, 23b) is motorized.

5. Machine according to claim 1, **characterized in that** each of said breaking counter-tools is a wheel (20b, 21b) carried in a rotatable manner around its axis (A2) by a respective support (24b, 25b) rotatable around said axis Z2 or Z3 and having a configuration complementary to that of the wheel (20a, 21a) constituting the breaking tool cooperating with it.

6. Machine according to claim 5, **characterized in that** said wheel (20b, 21b) constituting each of said breaking counter-tools (20b, 21b) is formed by two independent wheel elements, mounted on said support (24b, 25b) in a freely rotatable manner around their common axis (A2), independently of one another.

7. Machine according to claim 5, **characterized in that** said support (24b, 25b) carrying each breaking counter-tool (20b, 21b) is freely rotatable around said axis Z2 or Z3 and **in that** each of said wheels (20b, 21b) which constitute said breaking counter-tools has its axis (A2) horizontally spaced apart with respect to the axis Z2 or Z3 of rotation of the respective support (24b, 25b).

8. Machine according to claim 5, **characterized in that** the rotation of said support (24b, 25b) carrying each breaking counter-tool (20b, 21b) is motorized.

9. Machine according to claim 1, **characterized in that** each of said upper and lower breaking tools (32a, 33a) has a spherical head for engagement against the plate (L).

10. Machine according to claim 9, **characterized in that** each of said breaking counter-tools (32b, 33b) has a pair of spherical heads aligned along two axes perpendicular to the supporting plane (2) and laterally offset with respect to the spherical head (32a, 33a) of the cooperating tool.

11. Machine according to any one of the preceding claims, **characterized in that** means for imparting a reciprocating percussive movement are associated to said at least one breaking tool (18, 20a, 21a, 32a, 33a), along a direction perpendicular to the supporting plane.

12. Machine according to claim 1, **characterized in that** said means for moving (8, 9, 10) said plate in the horizontal direction X comprise one or more gripping members (8) of the plate, carried by an auxiliary bridge (9) movable relative to the fixed bench (1), below or above the supporting plane (2), upstream or downstream of the fixed cutting bridge (3).

13. Machine according to claim 12, **characterized in that** said auxiliary bridge (9) is also provided with a plurality of stop members (11) for contact with the front edge of the plate in order to arrest the latter in a desired position relative to the fixed cutting bridge (3).

14. Machine according to claim 12 or 13, **characterized in that** said gripping means (8) for gripping the plate (L) are selected from clamps (8) adapted to grip an edge of the plate (L) or vacuum cups adapted to engage the upper or lower surface of the plate (L).

15. Machine according to any one of the preceding claims, **characterized in that** at least one of said upper (4) and lower (5) carriages also carries a heating device (26) for softening of the film of synthetic material in the breaking operation,
said machine being further **characterized in that** the electronic means control (PC) are further programmed to control, during the operation of softening the film of synthetic material, a movement in the X direction of the plate (L) and a movement in the direction Y of said at least one carriage (4, 5), these movements being coordinated in such a way as to obtain softening of the film of synthetic material according to said predetermined path (T, S, Q) in the plane of the plate (L), with rectilinear and/or curved lines, and without the need to impart a rotation to the plate.

16. A method for performing incision and breaking operations on glass plates (L), in particular laminated glass plates comprising two overlapped glass layers with a film of synthetic material interposed between them, wherein it is arranged as:
- a fixed work bench (1), defining a supporting plane (2) intended to receive the plate (L) to be processed,
- a fixed cutting bridge (3) equipped with an upper carriage (4) and a lower carriage (5) movable along the cutting bridge (3) in a direction Y parallel to the longitudinal direction of the cutting bridge (3),
- said upper carriage (4) and said lower carriage (5) carrying an upper incision tool (6) and a lower incision tool (7), respectively, for the incision of the upper and lower layers of the glass plate (L),
- said cutting bridge (3) being provided with actuating means for the movement of said upper (4) and lower (5) carriages along the Y direction,
- means for moving (8, 9, 10) said plate (L) on the fixed bench (1) in a horizontal direction X perpendicular to the aforesaid direction Y, and
- means for the electronic control (PC) of said actuating means for the movement of said upper (4) and lower (5) carriages along the Y direction and said means for moving (8, 9, 10) the plate (L) in X direction,
- both the upper incision tool (6) and the lower incision tool (7) being rotatably mounted (16, 17) about an axis Z1 perpendicular to the X direction and the Y direction,
and wherein the electronic control means (PC) control, during the incision operation of the glass plate (L), a movement in the X direction of the plate (L) and a movement in the Y direction of said carriages (4, 5), such movements being coordinated with each other so as to obtain an incision according to a predetermined path (T, S, Q) in the plane of plate (L), with rectilinear and/or curved lines, and without the need to impart a rotation to the plate,
- said upper and lower incision tools (6, 7) being always orientated, during the incision operation, according to the tangent of the incision path at the point of the path in which they are located,
said method being **characterized in that** an upper breaking tool (18, 20a, 32a) and a lower breaking tool (21a, 33a) are provided, carried by said upper (4) and lower (5) carriages, respectively, for the breaking of the lower layer and the upper layer of the plate (L), and **in that**
the aforesaid electronic control means (PC) control, during a breaking operation of the glass plate (L) subsequent to an incision operation, a movement in the X direction of the plate (L) and a movement in the direction Y of said carriages (4, 5) carrying said breaking tools (18, 20a, 21a, 32a, 33a), these movements being coordinated in such a way as to obtain breaking of said layers of the plate according to the aforesaid predetermined path (T, S, Q) in the plane of the plate (L), with rectilinear and/or curved lines, and without the need to impart a rotation to the plate, and
**in that** a lower breaking counter-tool (20b, 32b) cooperating with said upper breaking tool (18, 20a, 32a) and an upper breaking counter-tool (21b, 33b) are also provided, cooperating with said lower breaking tool (21a, 33a), and
said lower (20b, 32b) and upper (21b, 33b) counter-tools being carried by said lower (5) and upper (4) carriages, respectively.

17. Method according to claim 16, **characterized in that** the aforesaid electronic control means (PC) control a first phase of coordinated movement of the plate and of said carriages (4, 5) to carry out the breaking of a first layer of the plate, and a second phase of coordinated movement of the plate and of said carriages to carry out the breaking of the second layer of the plate.

18. Method according to claim 17, **characterized in that**:
- at least one of said upper (4) and lower (5) carriages carries a heating device (26) for softening of the film of synthetic material subsequent to the breaking operation,
- subsequent to the breaking of the two layers of the plate, the aforesaid electronic control means (PC) control, during the operation of softening the film of synthetic material, a movement in the X direction of the plate (L) and a movement in the direction Y of said at least one carriage (4, 5), these movements being coordinated in such a way as to obtain softening of the film of synthetic material according to said predetermined path (T, S, Q) in the plane of plate (L), with rectilinear and/or curved lines, and without the need to impart a rotation to the plate.

## Patentansprüche

1. Vorrichtung zur Ausführung eines Schneidevorgangs und eines Brechvorgangs an Glasscheiben (L), insbesondere für Verbundglasscheiben mit zwei überlappten Glasschichten, wobei eine Schicht aus synthetischem Material dazwischen angeordnet ist, wobei die Vorrichtung umfasst:
- eine fixierte Werkbank (1), die eine Trägerebene (2) bildet, die die zu bearbeitende Scheibe (L) aufnehmen soll,
- eine fixierte Schneidebrücke (3), die mit einem oberen Schlitten (4) und einem unteren Schlitten (5) versehen ist, die entlang der Schneidebrücke (3) in einer Richtung Y parallel zu der Längsrichtung der Schneidebrücke (3) verschiebbar sind,
- wobei der obere Schlitten (4) und der untere Schlitten (5) entsprechend ein oberes Schneidewerkzeug (6) und ein unteres Schneidewerkzeug (7) für das Schneiden der oberen und unteren Schicht der Glasscheibe (L) tragen,
wobei die Schneidebrücke (3) mit einer Betätigungseinrichtung für die Verschiebung des oberen (4) und des unteren (5) Schlittens entlang der Y-Richtung versehen ist,
- eine Einrichtung zum Verschieben (8, 9, 10) der Scheibe (L) auf der fixierten Werkbank (1) in einer horizontalen Richtung X senkrecht zu der Richtung Y, und
- eine Einrichtung für die elektronische Steuerung (PC) der Betätigungseinrichtung für die Verschiebung des oberen (4) und des unteren (5) Schlittens entlang der Y-Richtung und der Einrichtung zum Verschieben (8, 9, 10) der Scheibe in der X-Richtung,
- wobei sowohl das obere Schneidewerkzeug (6) als auch das untere Schneidewerkzeug (7) drehbar um eine Achse Z1 senkrecht zu der X-Richtung und der Y-Richtung montiert sind,
- die elektronische Steuerungseinrichtung (PC) ferner programmiert ist, um während des Schneidevorgangs der Glasscheibe (L) eine Verschiebung in der X-Richtung der Scheibe (L) und eine Verschiebung in der Y-Richtung der Schlitten (4, 5) zu steuern, wobei diese Verschiebungen so koordiniert sind, dass ein Schnitt entsprechend einer vorbestimmten Bahn (T, S, Q) in der Ebene der Scheibe (L) mit geraden und/oder gekrümmten Linien und ohne Notwendigkeit, dass die Scheibe gedreht wird, erhalten wird,
- wobei das obere und das untere Schneidewerkzeug (6, 7) während des Schneidevorgangs stets entsprechend zu der Tangente der Bahn an dem Punkt der Bahn orientiert sind, an dem sie angeordnet sind,
wobei die Vorrichtung **dadurch gekennzeichnet ist, dass** sie ferner ein oberes Brechwerkzeug (18, 20a, 32a) und ein unteres Brechwerkzeug (21a, 33a) aufweist, die entsprechend von dem oberen (4) und dem unteren (5) Schlitten getragen werden, um die untere Schicht und die obere Schicht der Scheibe (L) zu brechen, und
dass die elektronische Steuerungseinrichtung (PC) ferner programmiert ist, während des Vorgangs des Brechens der Glasscheibe (L) nachfolgend zu einem Schneidevorgang eine Verschiebung in der X-Richtung der Scheibe (L) und eine Verschiebung in der Y-Richtung der Schlitten (4, 5), die das obere Brechwerkzeug (18, 20a, 32a) und das untere Brechwerkzeug (21a, 33a) tragen, zu steuern, wobei diese Verschiebungen so koordiniert sind, dass ein Brechen der Schichten der Scheibe entsprechend der vorbestimmten Bahn (T, S, Q) in der Ebene der Scheibe (L) mit geraden und/oder gekrümmten Linien und ohne die Notwendigkeit, die Scheibe (L) zu drehen, erreicht wird, und
dass die Vorrichtung ferner ein unteres Brech-Gegenwerkzeug (20b, 32b), das mit dem oberen Brechwerkzeug (18, 20a, 32a) zusammenwirkt, und ein oberes Brech-Gegenwerkzeug (21 b, 33b) aufweist, das mit dem unteren Brechwerkzeug (21a, 33a) zusammenwirkt, und
das untere (20b, 32b) und das obere (21 b, 33b) Gegenwerkzeug entsprechend von dem unteren (5) und dem oberen (4) Schlitten getragen werden.

2. Vorrichtung nach Anspruch 1, **dadurch gekennzeichnet, dass** das obere und das untere Brechwerkzeug (18, 20a, 21 a) jeweils ein Rad sind, das um seine Achse (A1) drehbar von einer entsprechenden Halterung (22b, 23b) getragen wird, die um eine Achse Z2 oder Z3 senkrecht zu der Richtung X und der Richtung Y steht.

3. Vorrichtung nach Anspruch 2, **dadurch gekennzeichnet, dass** die Halterung (22b, 23b) um die Achse Z2 oder Z3 frei drehbar ist und dass jedes der Räder, die das obere und das untere Brechwerkzeug (20a, 21 a) bilden, seine Achse (A1) horizontal beabstandet in Bezug zu der Achse Z2 oder Z3 der Drehung der entsprechenden Halterung (22b, 23b) hat.

4. Vorrichtung nach Anspruch 2, **dadurch gekennzeichnet, dass** die Drehung der Halterung (22b, 23b) motorisch erfolgt.

5. Vorrichtung nach Anspruch 1, **dadurch gekennzeichnet, dass** jedes der Brech-Gegenwerkzeuge ein Rad (20b, 21 b) ist, das drehbar um seine Achse (A2) von einer entsprechenden Halterung (24b, 25b) getragen wird, die um die Achse Z2 oder Z3 drehbar ist, und einen Aufbau komplementär zu dem Rad (20a, 21 a) hat, das das Brechwerkzeug, das damit zusammenwirkt, bildet.

6. Vorrichtung nach Anspruch 5, **dadurch gekennzeichnet, dass** das Rad (20b, 21 b), das jedes der Brech-Gegenwerkzeuge (20b, 21 b) bildet, durch zwei unabhängige Radelemente gebildet ist, die auf der Halterung (24b, 25b in frei drehbarer Weise um ihre gemeinsame Achse (A2) unabhängig voneinander montiert sind.

7. Vorrichtung nach Anspruch 5, **dadurch gekennzeichnet, dass** die Halterung (24b, 25b), die jedes Brech-Gegenwerkzeug (20b, 21 b) trägt, um die Achse Z2 oder Z3 frei drehbar ist, und dass jedes der Räder (20b, 21 b), die die Brech-Gegenwerkzeuge bilden, seine Achse (A2) horizontal beabstandet in Bezug zu der Achse Z2 oder Z3 der Drehung der entsprechenden Halterung (24b, 25b) hat.

8. Vorrichtung nach Anspruch 5, **dadurch gekennzeichnet, dass** die Drehung der Halterung (24b, 25b), die jedes Brech-Gegenwerkzeug (20b, 21 b) trägt, motorisch erfolgt.

9. Vorrichtung nach Anspruch 1, **dadurch gekennzeichnet, dass** das obere und das untere Brechwerkzeug (32a, 33a) jeweils einen kugelförmigen Kopf zum Kontakt mit der Scheibe (L) aufweist.

10. Vorrichtung nach Anspruch 9, **dadurch gekennzeichnet, dass** die Brech-Gegenwerkzeuge (32b, 33b) jeweils ein Paar aus kugelförmigen Köpfen aufweisen, die entlang zweier Achsen ausgerichtet sind, die senkrecht zu der Trägerebene (2) und seitlich versetzt in Bezug zu dem kugelförmigen Kopf (32a, 33a) des damit zusammenwirkenden Werkzeugs sind.

11. Vorrichtung nach einem der vorhergehenden Ansprüche, **dadurch gekennzeichnet, dass** eine Einrichtung, die eine schlagende Hin-und Her-Bewegung verleiht, mit dem mindestens einen Brechwerkzeug (18, 20a, 21 a, 32a, 33a) entlang einer Richtung senkrecht zu der Trägerebene verbunden ist.

12. Vorrichtung nach Anspruch 1, **dadurch gekennzeichnet, dass** die Einrichtung zum Verschieben (8, 9, 10) der Scheibe in der horizontalen Richtung X ein oder mehrere Greifelemente (8) für die Scheibe aufweist, die von einer Hilfsbrücke (9) getragen werden, die relativ zu der fixierten Werkbank (1), unter oder über der Trägerebene (2), vorgeordnet oder nachgeordnet zu der fixierten Schneidebrücke (3) bewegbar ist.

13. Vorrichtung nach Anspruch 12, **dadurch gekennzeichnet, dass** die Hilfsbrücke (9) ferner mit mehreren Anschlagselementen (11) zum Anschlagen an der vorderen Kante der Scheibe versehen ist, um die Scheibe in einer gewünschten Lage relativ zu der fixierten Schneidebrücke (3) anzuhalten.

14. Vorrichtung nach Anspruch 12 oder 13, **dadurch gekennzeichnet, dass** die Greifelemente (8) zum Greifen der Scheibe (L) ausgewählt sind aus Klemmen (8), die zum Ergreifen einer Kante der Scheibe (L) ausgebildet sind, oder aus Vakuumbechern, die ausgebildet sind, die obere oder die untere Oberfläche der Scheibe (L) zu kontaktieren.

15. Vorrichtung nach einem der vorhergehenden Ansprüche, **dadurch gekennzeichnet, dass** der obere (4) und/oder der untere (5) Schlitten auch eine Heizeinrichtung (26) zum Aufweichen der Schicht aus synthetischem Material beim Brechvorgang trägt,
wobei sich die Vorrichtung ferner dadurch auszeichnet, dass die elektronische Steuerungseinrichtung (PC) ferner programmiert ist, während des Vorgangs des Aufweichens der Schicht aus synthetischem Material eine Verschiebung in der X-Richtung der Scheibe (L) und eine Verschiebung in der Richtung Y des mindestens einen Schlittens (4, 5) zu steuern, wobei diese Verschiebungen so koordiniert sind, dass ein Aufweichen der Schicht aus synthetischem Material entsprechend der vorbestimmten Bahn (T, S, Q) in der Ebene der Scheibe (L) mit geraden und/oder gekrümmten Linien und ohne Notwendigkeit, die Scheibe zu drehen, erreicht wird.

16. Verfahren zur Ausführung eines Schneide-und Brechvorgangs an Glasscheiben (L), insbesondere Verbundglasscheiben mit zwei überlappten Glasschichten, wobei eine Schicht aus synthetischem Material dazwischen angeordnet ist, wobei folgende Anordnung verwendet wird:
- eine fixierte Werkbank (1), die eine Trägerebene (2) bildet, die die zu bearbeitende Scheibe (L) aufnehmen soll,
- eine fixierte Schneidebrücke (3), die mit einem oberen Schlitten (4) und einem unteren Schlitten (5) versehen ist, die entlang der Schneidebrücke (3) in einer Richtung Y parallel zu der Längsrichtung der Schneidebrücke (3) verschiebbar sind,
- wobei der obere Schlitten (4) und der untere Schlitten (5) entsprechend ein oberes Schneidewerkzeug (6) und ein unteres Schneidewerkzeug (7) für das Schneiden der oberen und unteren Schicht der Glasscheibe (L) tragen,
wobei die Schneidebrücke (3) mit einer Betätigungseinrichtung für die Verschiebung des oberen (4) und des unteren (5) Schlittens entlang der Y-Richtung versehen ist,
- eine Einrichtung zum Verschieben (8, 9, 10) der Scheibe (L) auf der fixierten Werkbank (1) in einer horizontalen Richtung X senkrecht zu der Richtung Y, und
- eine Einrichtung für die elektronische Steuerung (PC) der Betätigungseinrichtung für die Verschiebung des oberen (4) und des unteren (5) Schlittens entlang der Y-Richtung und der Einrichtung zum Verschieben (8, 9, 10) der Scheibe in der X-Richtung,
- wobei sowohl das obere Schneidewerkzeug (6) als auch das untere Schneidewerkzeug (7) drehbar um eine Achse Z1 senkrecht zu der X-Richtung und der Y-Richtung montiert sind,
- die elektronische Steuerungseinrichtung (PC) ferner programmiert ist, um während des Schneidevorgangs der Glasscheibe (L) eine Verschiebung in der X-Richtung der Scheibe (L) und eine Verschiebung in der Y-Richtung der Schlitten (4, 5) zu steuern, wobei diese Verschiebungen so koordiniert sind, dass ein Schnitt entsprechend einer vorbestimmten Bahn (T, S, Q) in der Ebene der Scheibe (L) mit geraden und/oder gekrümmten Linien und ohne Notwendigkeit, dass die Scheibe gedreht wird, erhalten wird,
- wobei das obere und das untere Schneidewerkzeug (6, 7) während des Schneidevorgangs stets entsprechend zu der Tangente der Bahn an dem Punkt der Bahn orientiert sind, an dem sie angeordnet sind,
wobei das Verfahren **dadurch gekennzeichnet ist, dass** ein oberes Brechwerkzeug (18, 20a, 32a) und ein unteres Brechwerkzeug (21 a, 33a) bereit gestellt werden, die entsprechend von dem oberen (4) und dem unteren (5) Schlitten getragen werden, um die untere Schicht und die obere Schicht der Scheibe (L) zu brechen, und
dass die elektronische Steuerungseinrichtung (PC) während des Vorgangs des Brechens der Glasscheibe (L) nachfolgend zu einem Schneidevorgang eine Verschiebung in der X-Richtung der Scheibe (L) und eine Verschiebung in der Y-Richtung der Schlitten (4, 5), die das obere Brechwerkzeug (18, 20a, 32a) und das untere Brechwerkzeug (21a, 33a) tragen, steuert, wobei diese Verschiebungen so koordiniert werden, dass ein Brechen der Schichten der Scheibe entsprechend der vorbestimmten Bahn (T, S, Q) in der Ebene der Scheibe (L) mit geraden und/oder gekrümmten Linien und ohne die Notwendigkeit, die Scheibe (L) zu drehen, erreicht wird, und
dass ein unteres Brech-Gegenwerkzeug (20b, 32b) bereit gestellt wird, das mit dem oberen Brechwerkzeug (18, 20a, 32a) zusammenwirkt, und ein oberes Brech-Gegenwerkzeug (21 b, 33b) aufweist, das mit dem unteren Brechwerkzeug (21a, 33a) zusammenwirkt, und
das untere (20b, 32b) und das obere (21 b, 33b) Gegenwerkzeug entsprechend von dem unteren (5) und dem oberen (4) Schlitten getragen werden.

17. Verfahren nach Anspruch 16, **dadurch gekennzeichnet, dass** die elektronische Steuerungseinrichtung (PC) eine erste Phase einer koordinierten Verschiebung der Scheibe und der Schlitten (4, 5) so steuert, dass das Brechen einer ersten Schicht der Scheibe ausgeführt wird, und eine zweite Phase einer koordinierten Verschiebung der Scheibe und der Schlitten so steuert, dass das Brechen der zweiten Schicht der Scheibe ausgeführt wird.

18. Verfahren nach Anspruch 17, **dadurch gekennzeichnet, dass**:
- der obere (4) und/oder der untere (5) Schlitten eine Heizeinrichtung (26) zum Aufweichen der Schicht aus synthetischem Material nach dem Brechvorgang trägt,
- nach dem Brechen der zwei Schichten der Scheibe die elektronische Steuerungseinrichtung (PC) während des Vorgangs des Aufweichens der Schicht aus synthetischem Material eine Verschiebung in der X-Richtung der Scheibe (L) und eine Verschiebung in Richtung Y des mindestens einen Schlittens (4, 5) steuert, wobei diese Verschiebungen so koordiniert werden, dass eine Aufweichung der Schicht aus synthetischem Material entsprechend der vorbestimmten Bahn (T, S, Q) in der Ebene der Scheibe (L) mit geraden und/oder gekrümmten Linien und ohne Notwendigkeit, die Scheibe zu drehen, erreicht wird.

## Revendications

1. Machine pour effectuer des opérations d'incision et de rupture sur des plaques de verre (L), en particulier sur des plaques de verre feuilleté comprenant deux feuilles de verre superposées avec un film en matière synthétique interposé entre-elles, ladite machine comprenant :
- un établi fixe (1), définissant un plan de support (2) destiné à recevoir la plaque (L) devant être traitée,
- un pont de coupe fixe (3) muni d'un chariot supérieur (4) et d'un chariot inférieur (5) pouvant se déplacer le long du pont de coupe (3) dans une direction Y parallèle à la direction longitudinale du pont de coupe (3),
- ledit chariot supérieur (4) et ledit chariot inférieur (5) portant un outil d'incision supérieur (6) et un outil d'incision inférieur (7), respectivement, pour l'incision des couches supérieure et inférieure de la plaque de verre (L),
- ledit pont de coupe (3) étant muni de moyens d'actionnement pour le déplacement desdits chariots supérieur (4) et inférieur (5) le long de la direction Y,
- des moyens de déplacement (8, 9, 10) de ladite plaque (L) sur l'établi fixe (1) dans une direction horizontale X perpendiculaire à la direction Y précitée, et
- des moyens de commande électronique (PC) desdits moyens d'actionnement pour le déplacement desdits chariots supérieur (4) et inférieur (5) le long de la direction Y et desdits moyens de déplacement (8, 9, 10) de la plaque dans la direction X,
- l'outil d'incision supérieur (6) et l'outil d'incision inférieur (7) étant tous les deux montés en rotation autour d'un axe Z1 perpendiculaire à la direction X et à la direction Y,
- les moyens de commande électronique (PC) étant en outre programmés pour commander, au cours de l'opération d'incision de la plaque de verre (L), un déplacement dans la direction X de la plaque (L) et un déplacement dans la direction Y desdits chariots (4, 5), ces déplacements étant coordonnés de manière à obtenir une incision en fonction d'une trajectoire prédéterminée (T, S, Q) dans le plan de la plaque (L), avec des lignes rectilignes et/ou courbes, et sans qu'il soit nécessaire de conférer une rotation à la plaque,
- lesdits outils d'incision supérieur et inférieur (6, 7) étant toujours orientés, au cours de l'opération d'incision, en fonction de la tangente de la trajectoire d'incision au niveau du point de la trajectoire dans lequel ils sont situés,
ladite machine étant **caractérisée en ce qu'**elle comprend en outre un outil de rupture supérieur (18, 20a, 32a) et un outil de rupture inférieur (21 a, 33a) portés par lesdits chariots supérieur (4) et inférieur (5), respectivement, pour la rupture de la couche inférieure et de la couche supérieure de la plaque (L), et
**en ce que** les moyens de commande électronique (PC) précités sont en outre programmés pour commander, au cours d'une opération de rupture de la plaque de verre (L) ultérieure à une opération d'incision, un déplacement dans la direction X de la plaque (L) et un déplacement dans la direction Y desdits chariots (4, 5) portant ledit outil de rupture supérieur (18, 20a, 32a) et un outil de rupture inférieur (21 a, 33a), ces déplacements étant coordonnés de manière à réaliser la rupture desdites couches de la plaque en fonction de ladite trajectoire prédéterminée (T, S, Q) dans le plan de la plaque (L), avec des lignes rectilignes et/ou courbes, et sans qu'il soit nécessaire de conférer une rotation à la plaque (L), et
**en ce que** la machine comprend en outre un contre-outil de rupture inférieur (20b, 32b) coopérant avec ledit outil de rupture supérieur (18, 20a, 32a) et un contre-outil de rupture supérieur (21 b, 33b) coopérant avec ledit outil de rupture inférieur (21 a, 33a), et
lesdits contre-outils inférieur (20b, 32b) et supérieur (21 b, 33b) étant portés par lesdits chariots supérieur (4) et inférieur (5), respectivement.

2. Machine selon la revendication 1, **caractérisée en ce que** chacun desdits outils de rupture supérieur et inférieur (18, 20a, 21 a) est une roue portée de manière rotative autour de son axe (A1) par un support respectif (22b, 23b) pouvant tourner autour d'un axe Z2 ou Z3 perpendiculaire à la direction X et à la direction Y.

3. Machine selon la revendication 2, **caractérisée en ce que** ledit support (22b, 23b) peut tourner librement autour dudit axe Z2 ou Z3 et **en ce que** chacune desdites roues constituant lesdits outils de rupture supérieur et inférieur (20a, 21 a) a son axe (A1) espacé horizontalement par rapport à l'axe Z2 ou Z3 de rotation du support respectif (22b, 23b).

4. Machine selon la revendication 2, **caractérisée en ce que** la rotation dudit support (22b, 23b) est motorisée.

5. Machine selon la revendication 1, **caractérisée en ce que** chacun desdits contre-outils de rupture est une roue (20b, 21 b) portée de manière rotative autour de son axe (A2) par un support respectif (24b, 25b) pouvant tourner autour dudit axe Z2 ou Z3 et ayant une configuration complémentaire à celle de la roue (20a, 21 a) constituant l'outil de rupture coopérant avec elle.

6. Machine selon la revendication 5, **caractérisée en ce que** ladite roue (20b, 21 b) constituant chacun desdits contre-outils de rupture (20b, 21 b) est formée par deux éléments de roue indépendants, montés sur ledit support (24b, 25b) de manière à pouvoir tourner librement autour de leur axe commun (A2), indépendamment l'un de l'autre.

7. Machine selon la revendication 5, **caractérisée en ce que** ledit support (24b, 25b) portant chaque contre-outil de rupture (20b, 21 b) peut tourner librement autour dudit axe Z2 ou Z3 et **en ce que** chacune desdites roues (20b, 21 b) qui constituent lesdits contre-outils de rupture a son axe (A2) espacé horizontalement par rapport à l'axe Z2 ou Z3 de rotation du support respectif (24b, 25b).

8. Machine selon la revendication 5, **caractérisée en ce que** la rotation dudit support (24b, 25b) portant chaque contre-outil de rupture (20b, 21 b) est motorisée.

9. Machine selon la revendication 1, **caractérisée en ce que** chacun desdits outils de rupture supérieur et inférieur (32a, 33a) a une tête sphérique pour un engagement contre la plaque (L).

10. Machine selon la revendication 9, **caractérisée en ce que** chacun desdits contre-outils de rupture (32b, 33b) a une paire de têtes sphériques alignées le long de deux axes perpendiculaires au plan de support (2) et décalées latéralement par rapport à la tête sphérique (32a, 33a) de l'outil coopérant.

11. Machine selon l'une quelconque des revendications précédentes, **caractérisée en ce que** les moyens pour conférer un mouvement à percussion alternative de sont associés au moins audit un outil de rupture (18, 20a, 21a, 32a, 33a), le long d'une direction perpendiculaire au plan de support.

12. Machine selon la revendication 1, **caractérisée en ce que** lesdits moyens de déplacement (8, 9, 10) de ladite plaque dans la direction horizontale X comprennent un ou plusieurs élément(s) de saisie (8) de la plaque, porté(s) par un pont auxiliaire (9) pouvant se déplacer par rapport à l'établi fixe (1), en dessous ou au-dessus du plan de support (2), en amont ou en aval du pont de coupe fixe (3).

13. Machine selon la revendication 12, **caractérisé en ce que** ledit pont auxiliaire (9) est également muni d'une pluralité d'éléments d'arrêt (11) pour un contact avec le bord avant de la plaque afin d'arrêter ce dernier dans une position souhaitée par rapport au pont de coupe fixe (3).

14. Machine selon la revendication 12 ou 13, **caractérisée en ce que** lesdits moyens de saisie (8) pour saisir la plaque (L) sont choisis parmi des pinces (8) adaptées pour saisir un bord de la plaque (L) ou des ventouses adaptées pour engager la surface supérieure ou inférieure de la plaque (L).

15. Machine selon l'une quelconque des revendications précédentes, **caractérisée en ce qu'**au moins l'un desdits chariots supérieur (4) et inférieur (5) porte également un dispositif de chauffage (26) pour le ramollissement du film en matière synthétique lors de l'opération de rupture,
ladite machine étant en outre **caractérisée en ce que** les moyens de commande électronique (PC) sont en outre programmés pour commander, au cours de l'opération de ramollissement du film en matière synthétique, un déplacement dans la direction X de la plaque (L) et un déplacement dans la direction Y dudit au moins un chariot (4, 5), ces déplacements étant coordonnés de manière à obtenir un ramollissement du film en matière synthétique en fonction de ladite trajectoire prédéterminée (T, S, Q) dans le plan de la plaque (L), avec des lignes rectilignes et/ou courbes, et sans qu'il soit nécessaire de conférer une rotation à la plaque.

16. Procédé pour effectuer des opérations d'incision et de rupture sur des plaques de verre (L), en particulier sur des plaques de verre feuilleté comprenant deux feuilles de verre superposées avec un film en matière synthétique interposé entre-elles, dans lequel il comprend :
- un établi fixe (1), définissant un plan de support (2) destiné à recevoir la plaque (L) devant être traitée,
- un pont de coupe fixe (3) muni d'un chariot supérieur (4) et d'un chariot inférieur (5) pouvant se déplacer le long du pont de coupe (3) dans une direction Y parallèle à la direction longitudinale du pont de coupe (3),
- ledit chariot supérieur (4) et ledit chariot inférieur (5) portant un outil d'incision supérieur (6) et un outil d'incision inférieur (7), respectivement, pour l'incision des couches supérieure et inférieure de la plaque de verre (L),
- ledit pont de coupe (3) étant muni de moyens d'actionnement pour le déplacement desdits chariots supérieur (4) et inférieur (5) le long de la direction Y,
- des moyens de déplacement (8, 9, 10) de ladite plaque (L) sur l'établi fixe (1) dans une direction horizontale X perpendiculaire à la direction Y précitée, et
- des moyens de commande électronique (PC) desdits moyens d'actionnement pour le déplacement desdits chariots supérieur (4) et inférieur (5) le long de la direction Y et desdits moyens de déplacement (8, 9, 10) de la plaque dans la direction X,
- l'outil d'incision supérieur (6) et l'outil d'incision inférieur (7) étant tous les deux montés en rotation autour d'un axe Z1 perpendiculaire à la direction X et à la direction Y,
et dans lequel les moyens de commande électronique (PC) commandent, au cours de l'opération d'incision de la plaque de verre (L), un déplacement dans la direction X de la plaque (L) et un déplacement dans la direction Y desdits chariots (4, 5), de tels déplacements étant coordonnés entre-eux de manière à obtenir une incision en fonction d'une trajectoire prédéterminée (T, S, Q) dans le plan de la plaque (L), avec des lignes rectilignes et/ou courbes, et sans qu'il soit nécessaire de conférer une la rotation de la plaque,
- lesdits outils d'incision supérieur et inférieur (6, 7) étant toujours orientés, au cours de l'opération d'incision, en fonction de la tangente de la trajectoire d'incision au niveau du point de la trajectoire dans lequel ils sont situés,
ledit procédé étant **caractérisé en ce qu'**un outil de rupture supérieur (18, 20a, 32a) et un outil de rupture inférieur (21 a, 33a) sont prévus, portés par lesdits chariots supérieur (4) et inférieur (5), respectivement, pour la rupture de la couche inférieure et de la couche supérieure de la plaque (L), et **en ce que**
les moyens de commande électronique (PC) précités commandent, au cours d'une opération de rupture de la plaque de verre (L) ultérieure à une opération d'incision, un déplacement dans la direction X de la plaque (L) et un déplacement dans la direction Y desdits chariots ( 4, 5) portant lesdits outils de rupture (18, 20a, 21 a, 32a, 33a), ces déplacements étant coordonnés de manière à obtenir une rupture desdites couches de la plaque en fonction de la trajectoire prédéterminée précitée (T, S, Q ) dans le plan de la plaque (L), avec des lignes rectilignes et/ou courbes, et sans qu'il soit nécessaire de conférer une rotation à la plaque, et
**en ce qu'**un contre-outil de rupture inférieur (20b, 32b) coopérant avec ledit outil de rupture supérieur (18, 20a, 32a) et un contre-outil de rupture supérieur (21 b, 33b) sont également prévus, coopérant avec ledit outil de rupture inférieur (21 a, 33a), et
lesdits contre-outils inférieur (20b, 32b) et supérieur (21 b, 33b) étant portés par lesdits chariots inférieur (5) et (4) supérieur, respectivement.

17. Procédé selon la revendication 16, **caractérisé en ce que** les moyens de commande électronique précités (PC) commandent une première phase d'un déplacement coordonné de la plaque et desdits chariots (4, 5) pour exécuter la rupture d'une première couche de la plaque, et une deuxième phase d'un déplacement coordonné de la plaque et desdits chariots pour réaliser la rupture de la deuxième couche de la plaque.

18. Procédé selon la revendication 17, **caractérisé en ce que** :
- au moins l'un desdits chariots supérieur (4) et inférieur (5) porte un dispositif de chauffage (26) pour le ramollissement du film en matière plastique suite à l'opération de rupture,
- à la suite de la rupture des deux couches de la plaque, les moyens de commande électronique (PC) précités commandent, au cours de l'opération de ramollissement du film en matière synthétique, un déplacement dans la direction X de la plaque (L) et un déplacement dans la direction Y dudit au moins un chariot (4, 5), ces déplacements étant coordonnés de manière à obtenir un ramollissement du film en matière synthétique en fonction de ladite trajectoire prédéterminée (T, S, Q) dans le plan de la plaque (L), avec des lignes rectilignes et/ou courbes, et sans qu'il soit nécessaire de conférer une rotation à la plaque.
